# EUROPEAN PATENT APPLICATION

(11) **EP 4 252 506 A1**
(43) Date of publication of application: **04.10.2023**
(21) Application number: 23161805.9
(22) Date of filing: 14.03.2023
(51) Int. Cl.: A01B 69/04, G05D 1/02

(54) **RUN CONTROL METHOD, RUN CONTROL SYSTEM, WORK VEHICLE, AND RUN CONTROL PROGRAM**

(30) Priority: 31.03.2022 JP 2022059517
(71) Applicant: Yanmar Holdings Co., Ltd., Osaka-shi, Osaka (JP)
(72) Inventor: MIYAMOTO, Shinnosuke, Okayama (JP); IWAMURA, Keisuke, Okayama (JP); UEHARA, Dai, Okayama (JP); SUZUKI, Shogo, Okayama (JP)
(74) Representative: Novagraaf International SA

(57) **Abstract**

[Problem] To provide a run control method, a run control system, a work vehicle, and a run control program that can improve an operator's operability in the work vehicle capable of switching between an automatic run and a manual run.

[Solution] A reception processing unit 112 receives an operator's operation on an operation tool that causes a work vehicle 10 to perform a given motion. The motion processing unit 114 causes the work vehicle 10 to perform a motion that corresponds to the operator's operation on the operation tool. A run processing unit 111 causes the work vehicle 10 to automatically run when the operator's first operation on the operation tool is received, and causes the work vehicle 10 to manually run when the operator's second operation on the operation tool is received.

## Description

### TECHNICAL FIELD

The present invention relates to a run control method, a run control system, a work vehicle, and a run control program that cause the work vehicle to run.

### BACKGROUND ART

Conventionally, as a work vehicle that can automatically run, there is known a work vehicle that automatically runs only at the time of a straight ahead run, and at the time of a turn, runs (manual run) in response to a manual steering (manual operation) by an operator. For example, Patent Document 1 discloses a configuration in which the automatic run is ended when the work vehicle during the automatic run reaches a point for moving from a straight ahead route to a turn route, and after a turn run by the manual steering of the operator is ended, the automatic run is started with the operator switching an automatic run operation switch to ON when the work vehicle enters the next straight ahead route.

### PRIOR ART DOCUMENT

### PATENT DOCUMENT

Patent Document 1: Japanese Unexamined Patent Application Publication No. 2019-208424

### SUMMARY OF INVENTION

### TECHNICAL PROBLEM

In the conventional technology; for switching the work vehicle from the manual run to the automatic run, the operator needs to operate, while performing the manual steering, the operation switch for switching between the automatic and the manual run, thus complicating the operation by the operator. In particular, for the work vehicle provided with a work instrument that can be lifted and lowered, the operator, at the end of the turn by the manual steering, needs to lower the work instrument in addition to operating the operation switch, thus further complicating the work.

An object of the present invention is to provide a run control method, a run control system, a work vehicle, and a run control program that can improve an operator's operability in the work vehicle capable of switching between an automatic run and a manual run.

### SOLUTION TO PROBLEM

A run control method according to the present invention is a run control method that controls a run of a work vehicle capable of switching between an automatic run by an automatic steering and a manual run by a manual steering of an operator. The run control method performs: receiving the operator's operation on an operation tool that causes the work vehicle to perform a given motion; causing the work vehicle to perform a motion that corresponds to the operator's operation on the operation tool; and causing the work vehicle to automatically run when the operator's first operation on the operation tool is received, and causing the work vehicle to manually run when the operator's second operation on the operation tool is received.

A run control system according to the present controls a run of a work vehicle capable of switching between an automatic run by an automatic steering and a manual run by a manual steering by an operator. The run control system includes: a reception processing unit; a motion processing unit; and a run processing unit. The reception processing unit receives the operator's operation on an operation tool that causes the work vehicle to perform a given motion. The motion processing unit causes the work vehicle to perform a motion that corresponds to the operator's operation on the operation tool. The run processing unit causes the work vehicle to automatically run when the operator's first operation on the operation tool is received, and causes the work vehicle to manually run when the operator's second operation on the operation tool is received.

A work vehicle according to the present invention is a work vehicle capable of switching between an automatic run by an automatic steering and a manual run by a manual steering of an operator. The work vehicle includes: an operation tool; and a control unit. The operation tool causes the work vehicle to perform a given motion in response to the operator's operation. The control unit that causes the work vehicle to perform a first motion and to automatically run when the operator's first operation on the operation tool is received, and causes the work vehicle to perform a second motion and to manually run when the operator's second operation on the operation tool is received.

A run control program according to the present invention is a run control program that controls a run of a work vehicle capable of switching between an automatic run by an automatic steering and a manual run by a manual steering of an operator. The run control program is a run control program for causing one or more processors to perform operations including: receiving the operator's operation on an operation tool that causes the work vehicle to perform a given motion; causing the work vehicle to perform a motion that corresponds to the operator's operation on the operation tool; and causing the work vehicle to automatically run when the operator's first operation on the operation tool is received, and causing the work vehicle to manually run when the operator's second operation on the operation tool is received.

### ADVANTAGEOUS EFFECTS OF INVENTION

The present invention can provide a run control method, a run control system, a work vehicle, and a run control program that can improve an operator's operability in the work vehicle capable of switching between an automatic run and a manual run.

### BRIEF DESCRIPTION OF DRAWINGS

Fig. 1 is a block diagram showing a configuration of a work vehicle according to an embodiment of the present invention.
Fig. 2 is an external view showing an example of the work vehicle according of the embodiment of the present invention.
Fig. 3 is an external view showing an example of an operation unit according to the embodiment of the present invention.
Fig. 4 is a view showing an example of a target route of the work vehicle according to the embodiment of the present invention.
Fig. 5A is a diagram showing a run method of an automatic run in the work vehicle according to the embodiment of the present invention.
Fig. 5B is a diagram showing the run method of the automatic run in the work vehicle according to the embodiment of the present invention.
Fig. 5C is a diagram showing the run method of the automatic run in the work vehicle according to the embodiment of the present invention.
Fig. 6A is a diagram showing an example of a display screen displayed on the operation unit according to the embodiment of the present invention.
Fig. 6B is a diagram showing an example of the display screen of the operation unit according to the embodiment of the present invention.
Fig. 7A is a diagram showing an example of a setting screen displayed on the operation unit according to the embodiment of the present invention.
Fig. 7B is a diagram showing an example of the setting screen displayed on the operation unit according to the embodiment of the present invention.
Fig. 7C is a diagram showing an example of the setting screen displayed on the operation unit according to the embodiment of the present invention.
Fig. 8A is a diagram showing an example of a work screen displayed on the operation unit according to the embodiment of the present invention.
Fig. 8B is a diagram showing an example of the work screen displayed on the operation unit according to the embodiment of the present invention.
Fig. 9 is a flowchart showing an example of a procedure of a run control process performed in the work vehicle according to the embodiment of the present invention.
Fig. 10A is a diagram showing an example of the setting screen displayed on the operation unit according to the embodiment of the present invention.
Fig. 10B is a diagram showing an example of the setting screen displayed on the operation unit according to the embodiment of the present invention.
Fig. 11A is a diagram showing an example of the setting screen displayed on the operation unit according to the embodiment of the present invention.
Fig. 11B is a diagram showing an example of the setting screen displayed on the operation unit according to the embodiment of the present invention.
Fig. 12 is a diagram showing an example of the setting screen displayed on the operation unit according to the embodiment of the present invention.

### DESCRIPTION OF EMBODIMENTS

The following embodiments are each an example of embodying the present invention, and are not intended to limit the technical scope of the present invention.

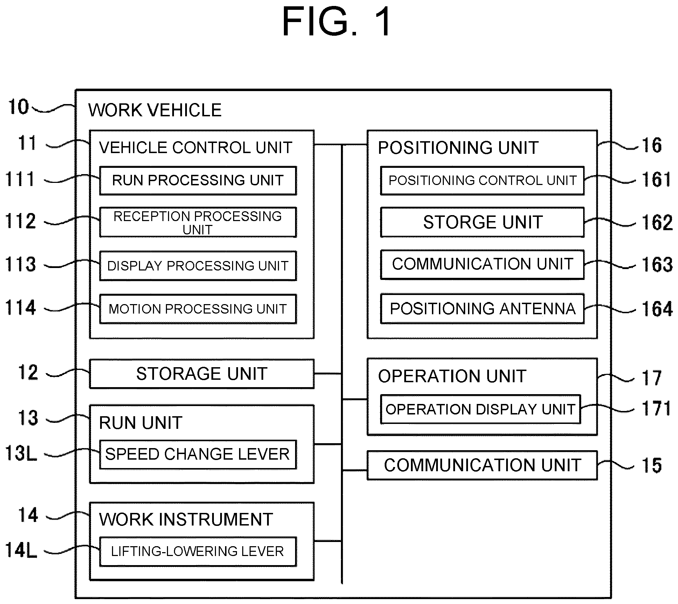

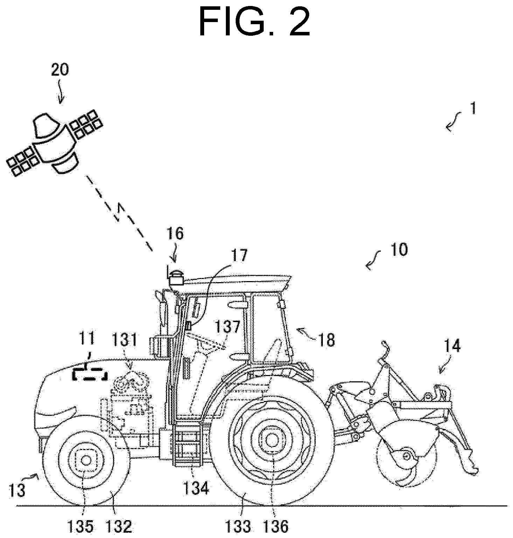

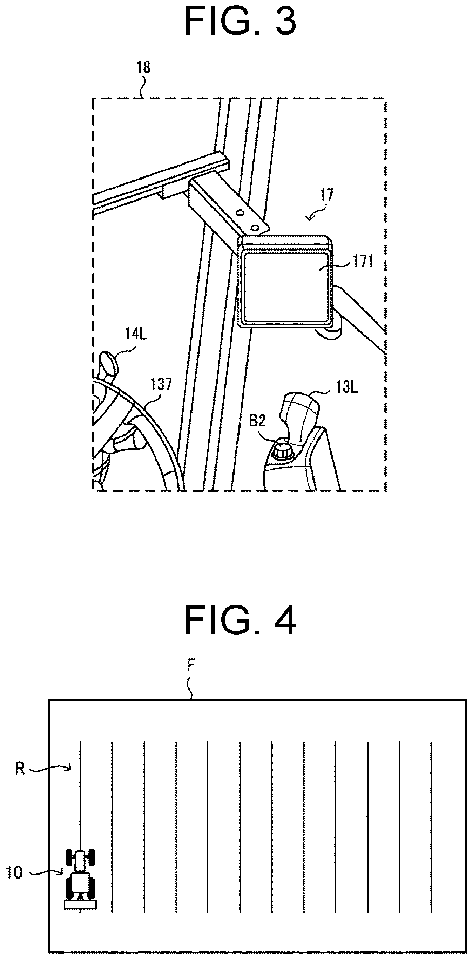

As shown in Figs. 1 and 2, an automatic run system 1 according to an embodiment of the present invention includes a work vehicle 10, a satellite 20, a base station (not shown). The automatic run system 1 controls the work vehicle 10's run that can be switched between an automatic run by an automatic steering and a manual run by an operator's manual steering. The automatic run system 1 is an example of a run control system of the present invention. The run control system of the present invention may be configured as a stand-alone work vehicle 10. In the present embodiment, a description will be made on a case where the work vehicle 10 is a tractor as an example. As another embodiment, the work vehicle 10 may be a rice transplanter, a combine harvester, a construction machine, a snowplow, or the like. In response to the operator's operation, the work vehicle 10 performs given work (for example, tillage work) while running following a target route R in a farm field F (see Fig. 4). Specifically, the work vehicle 10 runs straight ahead on the target route R in response to an automatic steering, and perform a turn run in response to a manual steering (driving operation) by the operator. The work vehicle 10 runs in the farm field F while switching between the automatic run on a straight ahead route and the manual run on a turn route, thereby to perform the work. The target route R may be preliminarily generated based on the operator's operation, and stored as route data.

The work vehicle 10 according to the present embodiment is so configured as to run by switching between a function of the automatic run while performing the automatic steering according to the target route R and a function of the manual run according to the manual steering of the operator.

For example, in the farm field F shown in Fig. 4, the work vehicle 10 runs by repeating the straight ahead run and the turn run until the work is ended. The multiple straight ahead routes are substantially parallel to each other. The target route R shown in Fig. 4 is one example, and the target route R is appropriately determined according to a size of the work vehicle 10, a size of a work instrument 14, contents of the work, a shape of the farm field F, and the like.

The automatic run system 1 includes an operation terminal (a tablet terminal, a smartphone, or the like) that is operated by the operator. The operation terminal can communicate with the work vehicle 10 via a communication network such as a mobile phone network, a packet line network, or a wireless LAN. For example, the operator performs an operation of registering various types of information (work vehicle information, farm field information, work information and the like) in the operation terminal. At a position away from the work vehicle 10, the operator can grasp a running status, a work status, and the like of the work vehicle 10 from a running track that is displayed on the operation terminal.

### [Work Vehicle 10]

As shown in Fig. 1 and Fig. 2, the work vehicle 10 includes a vehicle control unit 11, a storage unit 12, a run unit 13, the work instrument 14, a communication unit 15, a positioning unit 16, an operation unit 17, and the like. The vehicle control unit 11 is electrically connected to the storage unit 12, the run unit 13, the work instrument 14, the positioning unit 16, the operation unit 17, and the like. Note that the vehicle control unit 11 and the positioning unit 16 may be capable of performing a wireless communication. Further, the vehicle control unit 11 and the operation unit 17 may be capable of performing the wireless communication.

The communication unit 15 is a communication interface that connects the work vehicle 10 to the communication network in a wired or wireless manner, and performs, via the communication network, data communication, which accords to a given communication protocol, with an external device (operation terminal or the like).

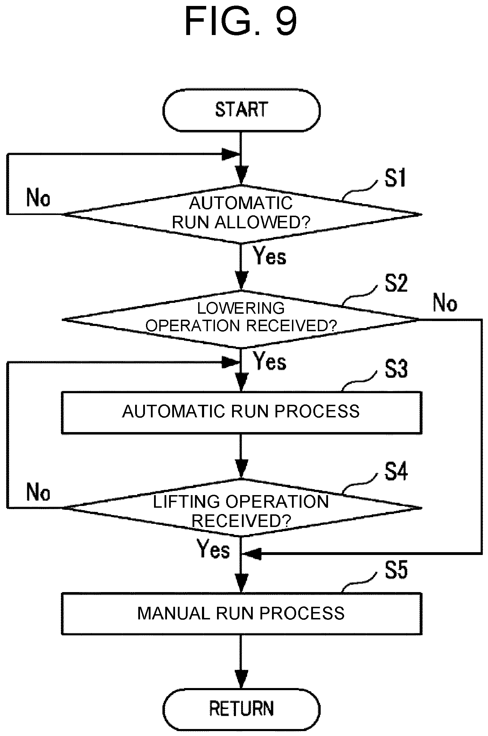

The storage unit 12 is a non-volatile storage unit such as HDD (Hard Disk Drive) or SSD (Solid State Drive) that stores various types of information. The storage unit 12 stores control programs such as run control program for causing the vehicle control unit 11 to perform a run control process (see Fig. 9) to be described below. For example, the run control program is non-transiently recorded in a computer-readable recording medium, such as a CD or a DVD, and is read by a given reading device (not shown) and stored in the storage unit 12. Note that the run control program may be downloaded from a server (not shown) via the communication network to the work vehicle 10 and stored in the storage unit 12.

The run unit 13 is a driving unit that causes the work vehicle 10 to run. As shown in Fig. 2, the run unit 13 has an engine 131, a front wheel 132, a rear wheel 133, a transmission 134, a front axle 135, a rear axle 136, and a steering wheel 137, and the like. It is noted that the front wheel 132 and the rear wheel 133 are provided on the left and right sides, respectively, of the work vehicle 10. Further, the run unit 13 is not limited to that of a wheel type including the front wheels 132 and the rear wheels 133 but may be that of a crawler type including crawlers provided to the right and left sides of the work vehicle 10.

The engine 131 is a drive source such as a diesel engine or a gasoline engine driven by using a fuel supplied to a fuel tank (not shown). The run unit 13 may include an electric motor as a drive source together with the engine 131 or instead of the engine 131. It is noted that a generator (not shown) is connected to the engine 131, and supplies electric power to electric components such as the vehicle control unit 11, a battery and the like, which are provided in the work vehicle 10. The battery stores the electric power supplied from the generator. Further, even after the engine 131 is stopped, the electric components such as the vehicle control unit 11, the positioning unit 16, and the operation unit 17, which are provided in the work vehicle 10, can be driven by the electric power supplied from the battery.

A drive force of the engine 131 is transmitted via the transmission 134 and the front axle 135 to the front wheel 132, and is transmitted via the transmission 134 and the rear axle 136 to the rear wheel 133. Also, the drive power of the engine 131 is transmitted via a PTO shaft (not shown) to the work instrument 14. The run unit 13 performs a running motion according to a command of the vehicle control unit 11.

The work instrument 14 is, for example, a cultivator, a seeder, a mower, a plow, a fertilizer applicator or the like, which can be removably attached to the work vehicle 10. As a result, the work vehicle 10 can perform any of the various work by using each of the work instruments 14. Fig. 2 shows a case where the work instrument 14 is the cultivator.

In the work vehicle 10, the work instrument 14 may be supported by a lifting/lowering mechanism (not shown) in a manner to be lifted or lowered. The vehicle control unit 11 can lift/lower the work instrument 14 by controlling the lifting/lowering mechanism. For example, the vehicle control unit 11, when the operator, by a lifting/lowering lever 14L (see Fig. 3), performs an operation to lower the work instrument 14 (for example, lowering the lifting/lowering lever 14L), lowers the work instrument 14, and when the operator, by the lifting/lowering lever 14L, performs an operation to lift the work instrument 14 (for example, lifting the lifting/lowering lever 14L), lifts the work instrument 14. The lifting/lowering lever 14L may be provided, for example, near the steering wheel 137 (see Fig. 3), but may be provided at any other position in a cabin 18.

Further, in the case of acquiring a work stop instruction, the vehicle control unit 11 outputs a work stop command to the work instrument 14. Upon acquiring the work stop instruction, the vehicle control unit 11 stops driving the PTO shaft thereby to stop work of the work instrument 14.

The steering wheel 137 is an operation unit operated by the operator or by the vehicle control unit 11. For example, the run unit 13 changes an angle of the front wheel 132 by a hydraulic power steering mechanism (not shown) in response to the steering wheel 137's operation by the operator or the vehicle control unit 11, thereby to change a forward direction of the work vehicle 10.

Further, the run unit 13 is provided with a speed change lever 13L (see Fig. 3), a shift lever, an accelerator, a clutch, a brake, a PTO switch (each not shown), etc. The run unit 13, for example, when the operator, by the speed change lever 13L, performs an accelerating operation to increase the speed of the work vehicle 10 (for example, moving the speed change lever 13L backward), increases the speed of the work vehicle 10, and when the operator, by the speed change lever 13L, performs a decelerating operation to decrease the speed of the work vehicle 10 (for example, moving the speed change lever 13L forward), decreases the speed of the work vehicle 10.

Further, the run unit 13, for example, when the operator sets the PTO switch to ON, transmits the drive power of the engine 131 via the PTO shaft to the work instrument 14 thereby to move the work instrument 14, and when the operator sets the PTO switch to OFF, cuts off the drive power's transmitting from the engine 131 to the work instrument 14 thereby to stop the motion of the work instrument 14.

Further, by using an electromagnetic brake, the run unit 13 brakes revolutions of the front wheels 132 and rear wheels 133 in response to an operation of the brake. Then, in accordance with an operation of the shift lever, the run unit 13 switches a gear of the transmission 134 to a forward gear or a backward gear or the like, thereby to switch a run mode of the work vehicle 10 to forward, backward or the like. Further, the run unit 13 controls a revolution speed of the engine 131 in response to an operation of the accelerator. Further, by using an electromagnetic brake, the run unit 13 brakes revolutions of the front wheels 132 and rear wheels 133 in response to an operation of the brake.

The above various operation tools for the operator to cause the work vehicle 10 to perform a given motion, such as the lifting/lowering lever 14L, the speed change lever 13L, the steering wheel 137, the shift lever, the accelerator, the clutch, and the PTO switch, are each an example of the operation tools of the present invention.

The positioning unit 16 is a communicator including a positioning control unit 161, a storage unit 162, a communication unit 163, a positioning antenna 164 and the like. For example, as shown in Fig. 2, the positioning unit 16 is provided at an upper portion of the cabin 18 where the operator boards. However, a place for placing the positioning unit 16 is not limited to the cabin 18. Further, the positioning control unit 161, the storage unit 162, the communication unit 163, and the positioning antenna 164 of the positioning unit 16 may be dispersed at different positions in the work vehicle 10. As described above, the battery is connected to the positioning unit 16, and thus the positioning unit 16 can be operated even when the engine 131 is stopped. For example, a mobile phone terminal, a smartphone, a tablet terminal, or the like may be used as the positioning unit 16.

The positioning control unit 161 is a computer system having one or more processors, and a storage memory such as a non-volatile memory and a RAM. The storage unit 162 is non-volatile memory or the like that stores: a positioning control program for causing the positioning control unit 161 to perform a positioning process; and data such as positioning information and movement information. For example, the positioning control program is non-transiently recorded in a computer-readable recording medium such as a CD or a DVD, and is read by a given reader (not shown) and stored in the storage unit 162. Further, the positioning control program may be downloaded from a server (not shown) via the communication network to the positioning unit 16 and stored in the storage unit 162.

The communication unit 163 is a communication interface that connects the positioning unit 16 to the communication network in the wired or wireless manner, and performs, via the communication network, the data communication, which accords to the given communication protocol, with the external device such as a base station server.

The positioning antenna 164 receives a radio wave (GNSS signal) emitted from the satellite 20.

The positioning control unit 161 calculates a current position of the work vehicle 10 based on the GNSS signal received by the positioning antenna 164 from the satellite 20. For example, when the positioning antenna 164 receives, while the work vehicle 10 automatically runs in the farm field F, the radio waves (emitted time, locus information, and the like) emitted from each of the multiple satellites 20, the positioning control unit 161 calculates a distance between the positioning antenna 164 and each of the satellites 20 and, based on the calculated distance, calculates the current position (a latitude and a longitude) of the work vehicle 10. Also, the positioning control unit 161 may perform a real-time kinematic positioning method (RTK-GPS positioning method (RTK method)) that calculates the current position of the work vehicle 10 by using correction information that corresponds to the base station (a reference station) near the work vehicle 10. As described above, the work vehicle 10 performs the automatic run by using the positioning information by the RTK-method. Further, the current position of the work vehicle 10 may be the same position as the positioned position (for example, a position of the positioning antenna 164) or may be a position that deviates from the positioned position.

The operation unit 17 is a device operated by the operator boarding the work vehicle 10, and is provided with an operation display unit 171. The operation display unit 171 is a user interface that includes: a display unit, such as a liquid crystal display or an organic EL display, for displaying various types of information; and an operation unit, such as an operation button or a touch screen, that receives an operation. The operation display unit 171 displays various setting screens and work screens. Further, the operation display unit 171 receives the operator's operation on the setting screen or the work screen. For example, as shown in Fig. 2 and Fig. 3, the operation unit 17 is placed near the steering wheel 137 in the cabin 18. Also, the operation unit 17 may be an operation terminal (tablet terminal, smartphone and the like) that can be carried by the operator.

The control unit includes an automatic run button (not shown) for the operator to give a run start instruction when causing the work vehicle 10 to automatically run. That is, the automatic run button has a function as a switch button (automatic run instruction button) for switching a run mode of the work vehicle 10 from the manual run (manual run mode) to the automatic run (automatic run mode).

Further, on the operation unit 17, the operator can make various settings related to the automatic run. A setting operation on the operation unit 17 is to be described below.

The vehicle control unit 11 has a control device such as a CPU, a ROM, and a RAM. The CPU is a processor that performs various types of arithmetic processes. The ROM is a non-volatile storage unit in which control programs, such as a BIOS and an OS, for causing the CPU to perform the various types of arithmetic processes are preliminarily stored. The RAM is a volatile or non-volatile storage unit that stores various types of information, and is used as a transient storage memory (work area) of the various types of processes to be performed by the CPU. Then, performing, with the CPU, the various types of control programs preliminarily stored in the ROM or the storage unit 12, the vehicle control unit 11 controls the work vehicle 10.

As shown in Fig. 1, the vehicle control unit 11 includes various processing units such as a run processing unit 111, a reception processing unit 112, a display processing unit 113, a motion processing unit 114, and the like. Note that the vehicle control unit 11 performs, with the CPU, various types of processes that accord to the run control program, thereby to function as the various processing units. Further, part or all of the processing units may be configured by an electronic circuit. Note that the run control program may be a program that causes a multiplicity of processors to function as the processing units.

The run processing unit 111 controls the run of the work vehicle 10. Specifically, when the run mode of the work vehicle 10 is the manual run (manual run mode), the run processing unit 111 causes the work vehicle 10 to manually run based on the operator's operation (manual steering). For example, the run processing unit 111 acquires operation information that corresponds to driving operations by the operator, such as a steering wheel operation, a speed change operation, a shift operation, an accelerating operation, and a brake operation, thereby to cause the run unit 13 to perform the running motion based on the operation information.

Further, the run processing unit 111, when the run mode of the work vehicle 10 is the automatic run (automatic run mode), causes the work vehicle 10 to automatically run based on position information (positioning information) showing the work vehicle 10's current position positioned by the positioning control unit 161. For example, the run processing unit 111, when the work vehicle 10 meets an automatic run start condition and acquires a run start instruction from the operator, causes the work vehicle 10 to start the automatic run based on the positioning information. Then, the run processing unit 111 causes the work vehicle 10 to automatically run according to the target route R (straight ahead route) preliminarily generated.

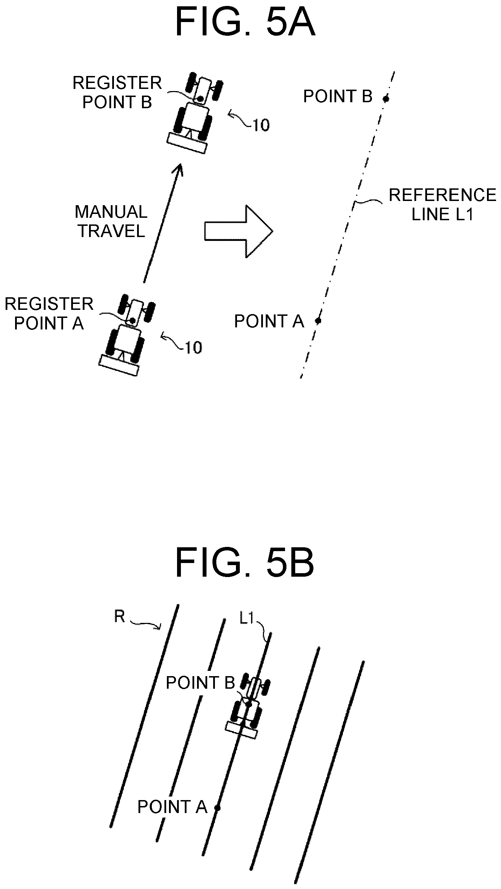

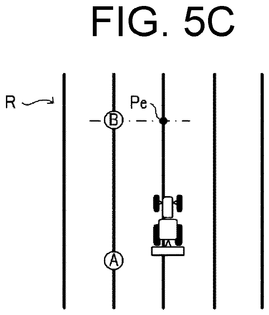

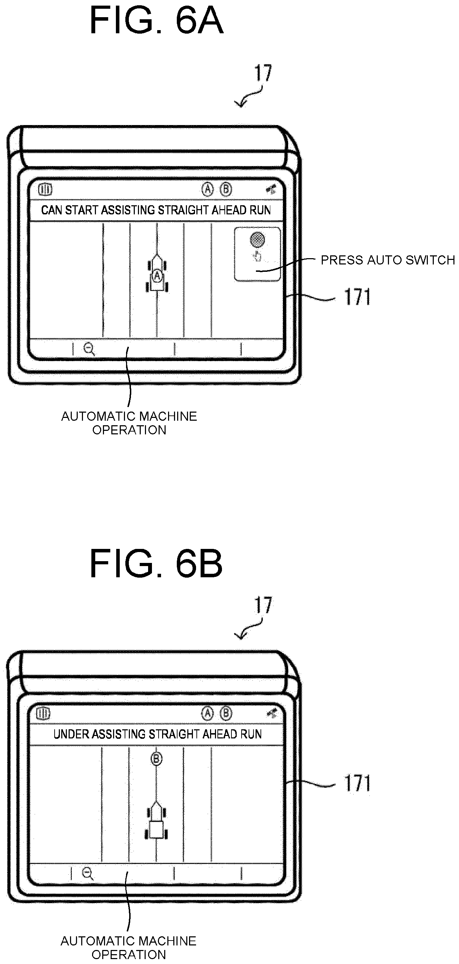

Here, a specific example (first run pattern) of the automatic run according to the present embodiment will be described with reference to Fig. 5 and Fig. 6. In the present embodiment, the work vehicle 10 is caused to automatically run in the farm field F shown in Fig. 4.

First, the operator sets a reference line L1 for generating the straight ahead route which is the target route R. For example, at an optional position in the farm field F (an outer peripheral end portion, for example), the operator causes the work vehicle 10 to manually run in a direction (target direction) in which the operator wants the work vehicle 10 to run and to work. Specifically, the operator causes the work vehicle 10 to run straight ahead in a direction parallel to a work direction (a cultivating direction, for example) used when the work vehicle 10 is to work in the work area. Then, the operator, when the work vehicle 10 is being caused to manually run in the intended target direction, operates (for example, touches) the operation display unit 171 twice at any position (for example, front or rear end portion of the work area). The vehicle control unit 11, by the operator's first operation, registers a position (point A) of the work vehicle 10, and registers, by the operator's second operation, a position (point B) of the work vehicle 10. Acquiring the position information of the point A and point B, the vehicle control unit 11 sets, as the reference line L1, a straight line passing through the point A and the point B (see Fig. 5A). The vehicle control unit 11 may be able to register the point B when the work vehicle 10 has run a given distance (for example, 5 m) after registering the point A. This can set the reference line L1 that is more accurate. The vehicle control unit 11 generates a run route (target route R) that includes the reference line L1 and a multiplicity of straight lines parallel to the reference line L1. For example, the vehicle control unit 11 generates a multiplicity of parallel straight lines based on a preset work width (lateral width of the work instrument 14) and a lap width (width overlapping the adjacent worked area), equally spaced left and right with the reference line L1 as a center (see Fig. 5B). The vehicle control unit 11 registers the generated target route R in the storage unit 12, and causes the operation unit 17 to display the generated target route R.

After the target route R is generated; for causing the work vehicle 10 to run straight ahead by the automatic steering in the farm field F, the operator, while watching the target route R displayed on the operation unit 17, moves the work vehicle 10 by the manual steering so that the direction (azimuth) of the work vehicle 10 becomes within a given range (given azimuth) relative to the direction of the reference line L1 (satisfying the automatic run start condition) (see Fig. 5C).

Fig. 6A shows an operation screen showing that the work vehicle 10 has met the automatic run start condition and is ready for the automatic run. The vehicle control unit 11, when the work vehicle 10 meets the automatic run start condition, causes the operation display unit 171 to display the operation screen shown in Fig. 6A. When the work vehicle 10 is ready for the automatic run, the operator presses the automatic run button (not shown) of the operation display unit 171 thereby to give the run start instruction. When the reception processing unit 112 receives the run start instruction, the run processing unit 111 starts an automatic steering of the work vehicle 10 so that the work vehicle 10 is along the straightest route closest to a current position P0 (see Fig. 5C). With this, the run processing unit 111 causes the work vehicle 10 to automatically run by the automatic steering along the straight ahead route.

Fig. 6B shows the display screen seen when the work vehicle 10 is automatically running. The vehicle control unit 11, when the work vehicle 10 starts the automatic run, causes the operation display unit 171 to display the display screen shown in Fig. 6B. The vehicle control unit 11, on the display screen, displays the straight ahead route, a work-ended area (work status), and the like.

As described above, the first run pattern of the automatic run is so configured that the automatic run is performed by preliminarily generating the target route R according to the work width and lap width of the work vehicle 10. As a second run pattern of the automatic run, it may be so configured that the automatic run is performed by generating the target route R based on the position of the work vehicle 10.

In the second run pattern, after the reference line L1 is set (see Fig. 5A), for example; when the operator moves the work vehicle 10 to the work start position and presses the automatic run button, the vehicle control unit 11 causes the work vehicle 10 to run straight ahead, from the work start position, parallel to the reference line L1 by the automatic steering.

The vehicle control unit 11 may apply the first and second run patterns according to the operator's selecting operation. For example, the vehicle control unit 11 may selectably display, on the setting screen (not shown), a first route creation mode that corresponds to the first run pattern and a second route creation mode that corresponds to the second run pattern, thereby to perform the automatic run by the route creation mode selected by the operator.

In the first and second run patterns; when the work vehicle 10 runs straight ahead by the automatic steering thereby to approach an end point Pe (point where a line perpendicular to the reference line L1 and passing through the point B intersects with the straight ahead route (straight line)) that corresponds to the point B of the reference line L1 (see Fig. 5C), the run processing unit 111 gives, to the operator, guidance information showing that the work vehicle 10 has approached the end point Pe (a message display, a voice guidance, etc.). Confirming the guidance information, the operator ends the automatic steering.

The run processing unit 111, when the work vehicle 10 reaches the end point Pe (end point of straight ahead route), switches the run mode to the manual run. The run processing unit 111 may switch the run mode to the manual run when determining that the work vehicle 10 has reached the end point Pe, or may switch the run mode to the manual run in response to the operator's operation. When the run mode is switched to the manual run, the operator causes the work vehicle 10 to perform the turn run by the manual steering, for example.

As described above, the run processing unit 111 switches the run mode in response to the operator's operation on the operation unit 17, causes the work vehicle 10 to automatically run on the straight ahead route (the target route R) by the automatic steering, and to manually run on the turn route by the manual steering. The automatic run button of the operation unit 17 is a dedicated button (dedicated operation tool) that has a function of causing the work vehicle 10 to automatically run.

By the way, when the operator operates the operation unit 17 (automatic run button) thereby to cause the work vehicle 10 to automatically run, the following problem may occur. Specifically, for example, for switching the run mode from the manual run to the automatic run, the operator performs the manual steering while checking the front such that the work vehicle 10 does not deviate from the turn route and matches the start position of the straight ahead route, and, meanwhile, presses down the automatic run button when the automatic run start condition is met. Further, the operator so operates as to lower the work instrument 14 (lower the lifting/lowering lever 14L) at the start position of the straight ahead route. In this way, for switching from the manual run to the automatic run, the operator must perform many operations, causing a problem of complicating the operations.
Thus, the work vehicle 10 of the present embodiment is further provided with a configuration that can improve the operator's operability seen when switching between the automatic run and the manual run.

Specifically, the reception processing unit 112 receives the operator's operation on the operation tool that causes the work vehicle 10 to perform the given motion. The operation tools include the lifting/lowering lever 14L, the speed change lever 13L, the steering wheel 137, the shift lever, the accelerator, the clutch, and the PTO switch which are described above. In the following, the lifting/lowering lever 14L is one example of the operation tools. For example, the reception processing unit 112 receives the operator's operation on the lifting/lowering lever 14L (see Fig. 3) (lifting/lowering operation of the lifting/lowering lever 14L) that causes the work vehicle 10 to perform the lifting/lowering motion of the work instrument 14.

The motion processing unit 114 causes the work vehicle 10 to perform a motion that corresponds to the operator's operation on the operation tool. For example, the motion processing unit 114 causes the work vehicle 10 to perform the work instrument 14's lifting/lowering motion that corresponds to the operator's operation on the lifting/lowering lever 14L. For example, when the operator so operates as to lower the lifting/lowering lever 14L and the reception processing unit 112 receives the operator's operation, the motion processing unit 114 outputs a lowering instruction to the lifting/lowering mechanism of the work instrument 14, thereby to lower the work instrument 14. Further, for example, when the operator so operates as to lift the lifting/lowering lever 14L and the reception processing unit 112 receives the operator's operation, the motion processing unit 114 outputs a lifting instruction to the lifting/lowering mechanism of the work instrument 14, thereby to lift the work instrument 14.

The run processing unit 111 causes the work vehicle 10 to automatically run when the operator's first operation on the operation tool is received, and causes the work vehicle 10 to manually run (automatic run is stopped) when the operator's second operation on the operation tool is received. For example, when the operator lowers the lifting/lowering lever 14L (an example of the first operation) and the reception processing unit 112 receives the operator's operation, the run processing unit 111 causes the work vehicle 10 to automatically run. Further, for example, when the operator lifts the lifting/lowering lever 14L (an example of the second operation) and the reception processing unit 112 receives the operator's operation, the run processing unit 111 causes the work vehicle 10 to manually run (automatic run is stopped).

In this way, when the operator lowers the lifting/lowering lever 14L, the motion processing unit 114 lowers the work instrument 14, and the run processing unit 111 causes the work vehicle 10 to automatically run. Meanwhile, when the operator lifts the lifting/lowering lever 14L, the motion processing unit 114 lifts the work instrument 14, and the run processing unit 111 causes the work vehicle 10 to manually run (automatic run is stopped).

The vehicle control unit 11, when receiving, from the operator, the first operation on the given operation tool, causes the work vehicle 10 to perform a first motion, which corresponds to the given operation tool, and to start the automatic run, and when receiving, from the operator, the second operation on the operation tool, causes the work vehicle 10 to perform a second motion, which corresponds to the given operation tool, and to start the manual run (automatic run is stopped). That is, in the work vehicle 10 of the present embodiment, the operation tool may have a function of receiving the instruction for a motion that the operation tool is inherently responsible for in combination with a function of receiving the instruction for switching between the automatic run and the manual run (run mode switching function). Further, the vehicle control unit 11 may switch between the automatic run and the manual run in a manner to be linked to the operator's operation on the operation tool.

According to the above configuration, when the work vehicle 10 runs manually runs on the turn route with the work instrument 14 lifted and switches to the automatic run on the straight ahead route, for example, the operator merely lowers the lifting/lowering lever 14L, thereby making it possible to give an instruction for the switching from the manual run to the automatic run and an instruction for lowering the work instrument 14. Thus, the operator can omit pressing down the automatic run button (see Fig. 3), making it possible to improve the operability.

As another embodiment, the reception processing unit 112 may receive, from the operator, a setting operation to set whether or not to link a first function to cause the work vehicle 10 to perform the given motion in response to the operator's operation on the operation tool to a second function (run mode switching function) to switch between the automatic run and the manual run in response to the operator's operation on the operation tool. That is, the work vehicle 10 may be so configured as to allow the operator to select whether or not to link the run mode switching function to the operation on the operation tool.

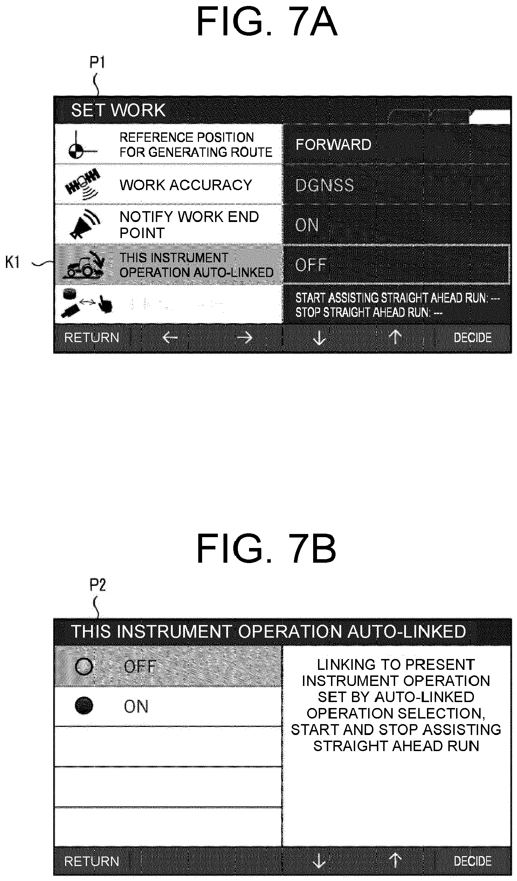

For example, when the operator selects the setting menu on a menu screen (not shown) displayed on the operation display unit 171 of the operation unit 17, the display processing unit 113 displays a setting screen P1 shown in Fig. 7A. Among the multiple setting items displayed on the setting screen P1, an item K1 of "This Instrument Operation Auto-Linked" is for setting whether or not to link the run mode switching function. When the item K1 is "OFF", the run mode switching function is not linked to the operation on the operation tool. In this case, the operator presses down the automatic run button thereby to start the automatic run, as described above (see Figs. 6A and 6B).

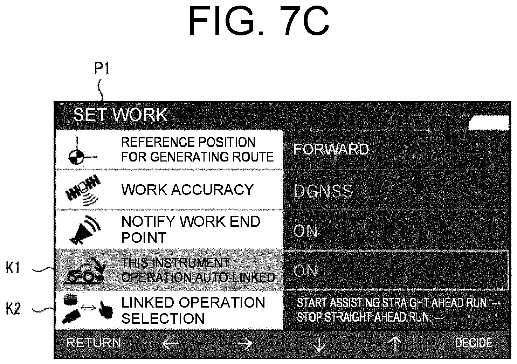

For linking the run mode switching function to the operation on the operation tool, the operator selects the item K1 (presses down a decision button) on the setting screen P1. When the operator selects the item K1, the display processing unit 113 displays a setting screen P2 shown in Fig. 7B. When the operator selects "ON" on the setting screen P2, the reception processing unit 112 sets the run mode switching function to ON, and the display processing unit 113 updates the item K1 on the setting screen P1 to "ON" (see Fig. 7C). This links the run mode switching function to the operation on the operation tool. The setting screen P1 is an example, and is not limited to the display contents in Figs. 7A to 7C. For example, when the operation tool is the lifting/lowering lever 14L, the notation "This Instrument Operation Auto-Linked" on the setting screen P1 may be "Work Instrument Auto-Linked", "Work Instrument Linked", "Lowering Auto-Linked", or the like.

When the item K1 is set to "ON", the run mode switching function is linked to the operation on the operation tool. In this case, the operator lowers the lifting/lowering lever 14L thereby to cause the work vehicle 10 to start the automatic run, and lifts the lifting/lowering lever 14L thereby to cause the work vehicle 10 to start the manual run (automatic run is stopped).

According to the above configuration, the operator can select whether or not to link the run mode switching function to the operation on the operation tool. For example, the operator who wishes to give, by the automatic run button, an instruction for starting the automatic run sets the item K1 to "OFF" (see Fig. 7A) thereby to make it possible to set the run mode switching function not to be linked. Meanwhile, the operator who wishes to give, in a manner to link to the operation on the operation tool, the instruction for starting the automatic run sets the item K1 to "ON" (see Fig. 7C) thereby to make it possible to set the run mode switching function to be linked.

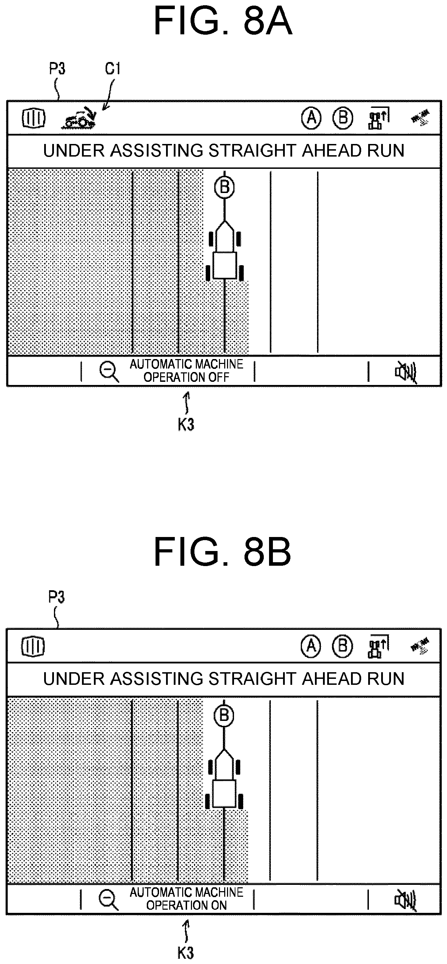

In the present embodiment, further, the display processing unit 113 may cause a work screen P3 to display information showing whether or not the run mode switching function is linked to the operation on the operation tool. Figs. 8A and 8B each show an example of the work screen P3 displayed on the operation display unit 171. When the "This Instrument Operation Auto-Linked" on the setting screen P1 is set to "ON" (see Fig. 7C), and the run mode switching function is linked, the display processing unit 113, during the running of the work vehicle 10, causes the work screen P3 to display an icon image C1 showing that the run mode switching function is linked, as shown in Fig. 8A. Meanwhile, when the "This Instrument Operation Auto-Linked" on the setting screen P1 is set to "OFF" (see Fig. 7A), and the run mode switching function is not linked, the display processing unit 113, during the running of the work vehicle 10, does not cause the work screen P3 to display the icon image C1, as shown in Fig. 8B. The display processing unit 113 may light or blink the icon image C1 when the run mode switching function is linked, and turn off (gray out) the icon image C 1 when the run mode switching function is not linked. Further, the display processing unit 113 may change a display color of the icon image C1 according to whether or not the run mode switching function is linked.

In the present embodiment, further, the reception processing unit 112 may receive, on the work screen P3 (see Figs. 8A and 8B), an operation in which the operator selects whether or not to link the run mode switching function. For example, the display processing unit 113 causes the work screen P3 to display a selection unit K3 for the operator to select whether or not to link the run mode switching function. On the work screen P3, when the operator selects the selection unit K3, the display processing unit 113 displays the setting screen P2 shown in Fig. 7B, thereby to receive the operator's selecting operation. On the work screen P3, the operator, while checking the work status, can turn on/off the link of the run mode switching function. The selection unit K3 is an example of a reception button of the present invention.

In this way, the reception processing unit 112 may be so configured as to receive, any of before and after starting the work of the work vehicle 10, the setting operation to select whether or not to link the run mode switching function. Here, in the case of the work in the entire farm field F, it is necessary to divide the area into the central area and the headland area. In the above case, the work in the headland area, due to the proximity to a ridge, requires a high accuracy. In this regard, according to the above configuration; turning on the link of the run mode switching function only for the center area and turning off the link of the run mode switching function for the headland ground area can improve the operator's operability.

Further, the work vehicle 10 may be provided with a physical switch B2 (see Fig. 3) that receives the setting operation. This allows the operator to easily grasp the operation unit for the setting operation, thereby making it possible to improve an operability of the setting operation.

### [Run Control Process]

Hereinafter, with reference to Fig. 9, an example of the run control process performed by the vehicle control unit 11 will be described. Note that the present invention may also be grasped as an invention of a run control method in which the vehicle control unit 11 performs part or all of the run control process or an invention of a run control program for causing the vehicle control unit 11 to perform part or all of the run control method. Further, one or more processors may perform the run control process.

The following is an example where the operation tool of the present invention is the lifting/lowering lever 14L (see Fig. 3) that lifts and lowers the work instrument 14, and the run mode switching function is linked (set to "This Instrument Operation Auto-Linked: ON") (see Fig. 7C) to the lifting/lowering lever 14L.

First, at step S1, the vehicle control unit 11 determines whether or not the work vehicle 10 is ready for the automatic run. For example, the vehicle control unit 11, when the starting automatic run condition, such as the work vehicle 10's azimuth being within the given azimuth, is met, determines that the work vehicle 10 is ready for the automatic run. The vehicle control unit 11, when determining that the work vehicle 10 is ready for the automatic run (S1: Yes), moves the process to step S2. The vehicle control unit 11 waits until the work vehicle 10 is ready for the automatic run (S1: No). At step S1, the work vehicle 10, with the work instrument 14 lifted, moves, according to the manual steering of the operator, to a position that meets the automatic run start condition.

Further, when the work vehicle 10 is ready for the automatic run (S1: Yes), the vehicle control unit 11 may cause the operation display unit 171 to display a message showing that the automatic run is possible (see Fig. 6A). As a result, the operator can recognize that the work vehicle 10 is ready for the automatic run.

At step S2, the vehicle control unit 11 determines whether or not the operation to lower the lifting/lowering lever 14L (lowering operation) has been received from the operator. When receiving, from the operator, the operation to lower the lifting/lowering lever 14L (S2: Yes), the vehicle control unit 11 moves the process to step S3. Meanwhile, when not receiving, from the operator, the operation to lower the lifting/lowering lever 14L (S2: No), the vehicle control unit 11 moves the process to step S5.

At step S3, the vehicle control unit 11 causes the work vehicle 10 to automatically run following the target route R. The target route R is, for example, a straight ahead route parallel to the reference line L1 passing through the points A and B registered by the operator's operation. When receiving the operation to lower the lifting/lowering lever 14L, the vehicle control unit 11 starts the automatic steering such that the work vehicle 10 is along the straight ahead route that is among the multiple straight ahead routes included in the target route R and that is closest to the current position P0 (see Fig. 5C). With this, the vehicle control unit 11 causes the work vehicle 10 to automatically run by the automatic steering along the straight ahead route.

Here, on the work screen P3 during the work vehicle 10 being in the automatically run, the vehicle control unit 11 may display the icon image C1 showing that the run mode switching function is linked (see Fig. 8A).

Next, at step S4, the vehicle control unit 11 determines whether or not the operation of lifting the lifting/lowering lever 14L (lifting operation) has been received from the operator. When receiving, from the operator, the operation of lifting the lifting/lowering lever 14L (S4: Yes), the vehicle control unit 11 moves the process to step S5. For example, the operator, when the work vehicle 10 reaches the end point of the straight ahead route (the beginning point of the turn route), lifts the lifting/lowering lever 14L. Meanwhile, when not receiving, from the operator, the operation to lift the lifting/lowering lever 14L (S4: No), the vehicle control unit 11 moves the process to step S3. The vehicle control unit 11 continues the automatic run process until the operation to lift the lifting/lowering lever 14L is received from the operator (S4: No). The vehicle control unit 11, at the time of the work vehicle 10 reaching the end point of the straight ahead route, stops the automatic run of the work vehicle 10.

At step S5, the vehicle control unit 11 causes the work vehicle 10 to manually run in response to the manual steering by the operator. For example, the operator performs the manual steering toward the next straight ahead route, thereby to cause the work vehicle 10 to perform the turn run. The vehicle control unit 11, after step S5, moves the process to the step S1.

Returning to step S1; when the work vehicle 10 reaches the end point of the turn route (the beginning point of the straight ahead route) to be ready for the automatic run (S1: Yes), and the operator lowers the lifting/lowering lever 14L (S2: Yes), for example, the vehicle control unit 11 again causes the work vehicle 10 to automatically run following the straight ahead route (S3).

In the process of each of the above steps, the vehicle control unit 11, when the work vehicle 10 has ended the work (at the time of reaching the work end position G), ends the run control process. The vehicle control unit 11, until the work vehicle 10 ends the work, repeats the processes of steps S1 to S5.

As described above, the vehicle control unit 11 performs the run control process on the work vehicle 10.

As described above, the vehicle control unit 11 according to the present invention controls the run of the work vehicle 10 which can switch between the automatic run by the automatic steering and the manual run by the operator's manual steering. Further, the vehicle control unit 11 receives the operator's operation on the operation tool that causes the work vehicle 10 to perform the given motion, and causes the work vehicle 10 to perform the motion that corresponds to the operator's operation on the operation tool. Also, the vehicle control unit 11, when receiving the operator's first operation on the operation tool, causes the work vehicle 10 to automatically run, and when receiving the operator's second operation on the operation tool, causes the work vehicle 10 to manually run (automatic run is stopped).

For example, the vehicle control unit 11 receives the operator's operation on the lifting/lowering lever 14L that causes the work vehicle 10 to perform the lifting/lowering motion of the work instrument 14. Further, the vehicle control unit 11 causes the work vehicle 10 to perform the lifting/lowering motion that accords to the operator's operation on the lifting/lowering lever 14L. Further, the vehicle control unit 11, when receiving the operator's lowering operation on the lifting/lowering lever 14L (first operation), causes the work vehicle 10 to automatically run, and when receiving the operator's lifting operation on the lifting/lowering lever 14L (second operation), causes the work vehicle 10 to manually run.

According to the above configuration, for example; when the operator lowers the lifting/lowering lever 14L, the work instrument 14 is lowered and the run mode is switched to the automatic run, and when the operator lifts the lifting/lowering lever 14L, the work instrument 14 is lifted and the run mode is switched to the manual run. Thus, the operator, for switching the run mode, does not need to operate the operation unit (for example, the automatic run button) that is different from the lifting/lowering lever 14L. Thus, the operator's operability when switching between the automatic run and the manual run can be improved.

### [Other Embodiments]

The present invention is not limited to the above embodiments, but may be the following embodiments.

In the above embodiment, the lifting/lowering lever 14L has been taken as the example of the operation tool that is linked to the run mode switching function, but the operation tool may be the speed change lever 13L, the steering wheel 137, the shift lever, the accelerator, the clutch, the PTO switch, etc. For example, when the above operation tool is the speed change lever 13L (see Fig. 3); the vehicle control unit 11, when the operator operates the speed change lever 13L to increase the speed (for example, tilting the speed change lever 13L backward), increases the speed of the work vehicle 10 and switches the run mode to the automatic run, and when the operator operates the speed change lever 13L to decelerate the speed (for example, tilting the speed change lever 13L forward), decelerates the speed of the work vehicle 10 and switches the run mode to the manual run.

Further, for example, when the control unit is the steering wheel 137 (see Fig. 3); the vehicle control unit 11, when the operator operates the steering wheel 137 thereby to switch the position of the steering wheel 137 to the neutral position (straight ahead position), causes the work vehicle 10 to move straight ahead and switches the run mode to the automatic run, and when the operator operates the steering wheel 137 thereby to switch, with the steering wheel 137's position as a turn position, the forward direction to the turn direction, causes the work vehicle 10 to turn and switches the run mode to the manual run.

Further, for example, when the operation tool is the shift lever (not shown), the vehicle control unit 11, when the operator puts the shift lever in the forward position, causes the work vehicle 10 to move forward and switches the run mode to the automatic run, and when the operator puts the shift lever in the rearward position (reverse), causes the work vehicle 10 to move rearward and switches the run mode to the manual run. Further, the vehicle control unit 11, when the operator first puts the shift lever in the forward position thereby to switch the run mode to the automatic run, switches the run mode to the manual run if the operator subsequently puts the shift lever in the backward position or the neutral position. Further, the vehicle control unit 11, when the operator first puts the shift lever in the rearward position thereby to switch the run mode to the automatic run, may switch the run mode to the manual run if the operator subsequently puts the shift lever in the forward position or the neutral position.

Further, for example, when the operation tool is the PTO switch (not shown), the vehicle control unit 11, when the operator turns the PTO switch ON, moves the work instrument 14 and switches the run mode to the automatic run, and when the operator turns the PTO switch OFF, stops the operation of the work instrument 14 and switches the run mode to the manual run.

Further, for example, when the control unit is the speed change lever (not shown), the vehicle control unit 11, when the operator moves the speed change lever to a position other than the minimum position, switches the run mode to the automatic run, and when the operator moves the speed change lever to the minimum position, switches the run mode to the manual run. In this way, the vehicle control unit 11, when the operation tool is a variable lever, may switch the automatic steering ON and OFF based on the position of the lever.

Here, the work vehicle 10 may be so configured as to allow the operator to select the operation tool to be linked to the run mode switching function. Specifically, on the setting screen, the vehicle control unit 11 receives an operation to select the type of the operation tool to be linked to the run mode switching function. For example, the setting screen P1 shown in Fig. 7C displays an item K2 of "Linked Operation Selection" for selecting the operation tool to be linked to the run mode switching function. Further, the display processing unit 113, when the item K1 of "This Instrument Operation Auto-Linked" the is set to "ON", may display the item K2 of "Linked Operation Selection" in a selectable state (active state).

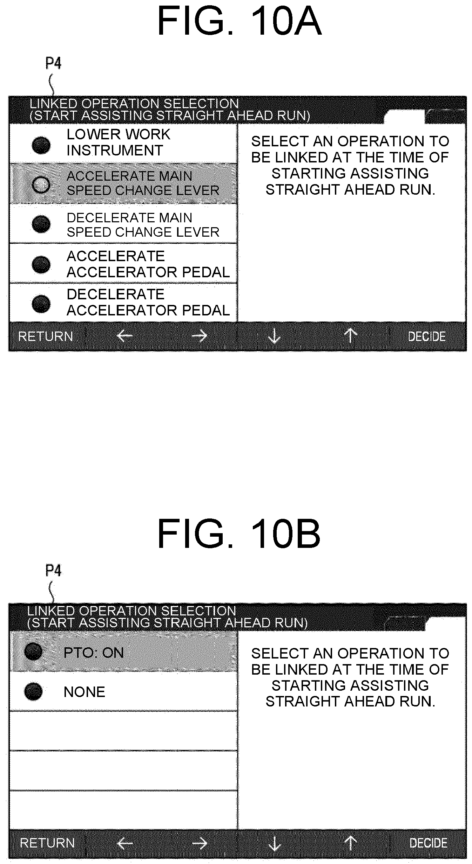

When the operator selects the item K2 (presses down the decision button) on the setting screen P1, the display processing unit 113 displays a setting screen P4 shown in each of Figs. 10A and 10B. Fig. 10A shows the first page of the setting screen P4, and Fig. 10B shows the second page of the setting screen P4. When the operator selects the operation tool ("Accelerate Main Speed Change Lever" in Fig. 10A) on the setting screen P4 thereafter to press "Determine", the reception processing unit 112 receives the selecting operation, and sets the speed change lever 13L as the operation tool that is to be linked to the run mode switching function. This allows the operator to link the run mode switching function to the desired operation tool.

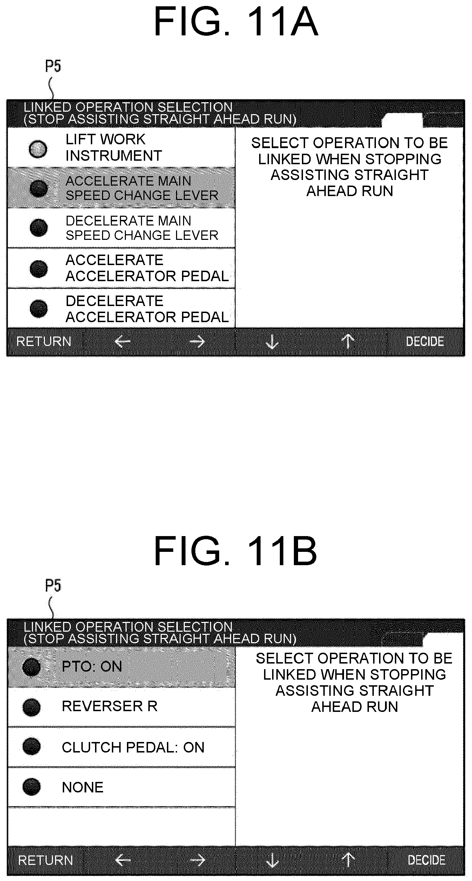

As another embodiment, multiple types of operation tools to be linked to the run mode switching function may be set up. Specifically, the operation tool that performs the process of switching from the manual run to the automatic run, and the operation tool that performs the process of switching from the automatic run to the manual run may be different from each other. For example, the display processing unit 113 causes the operation display unit 171 to display the setting screen P4 (see Fig. 10A and Fig. 10B) for setting the operation tool for starting the automatic run and a setting screen P5 (see Fig. 11A and Fig. 11B) for setting the operation tool for stopping the automatic run (for starting manual run).

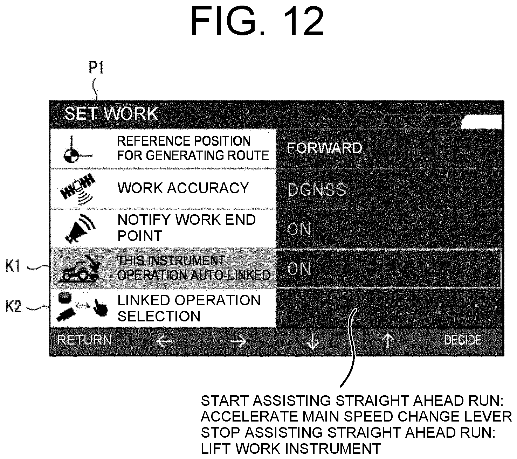

The operator, on the setting screen P4, selects the speed change lever 13L ("Accelerate Main Speed Change Lever") as the operation tool for starting the automatic run, and on the setting screen P5, selects the lifting/lowering lever 14L ("Lift Work Instrument") as the operation tool for starting the manual run (stop automatic run). As shown in Fig. 12, the display processing unit 113 displays the settings in the item K2 of the "Linked Operation Selection" of the setting screen P1.

According to the setting contents shown in Fig. 12, the vehicle control unit 11, when the operator performs the accelerating operation on the speed change lever 13L, increases the speed of the work vehicle 10 and switches the run mode to the automatic run and starts the automatic run, and when the operator lifts the lifting/lowering lever 14L, lifts the work instrument 14 and switches the run mode to the manual run and stops the automatic run.

The automatic run system 1 of the present invention may be so configured as to be provided with each processing unit included in the vehicle control unit 11. Further, the automatic run system 1 may be mounted on the work vehicle 10 or outside of the work vehicle 10, such as the operation terminal (tablet terminal, smartphone and the like), for example.

Further, the work vehicle 10 may be so configured as to include the operation tool that causes the work vehicle 10 to perform the given motion according to the operator's operation, and the vehicle control unit 11 (an example of the control unit of the present invention) that causes the work vehicle 10 to perform the first motion and to automatically run when the operator's first operation on the operation tool is received, and causes the work vehicle 10 to perform the second motion and to manually run when the operator's second operation on the operation tool is received.

### REFERENCE SIGNS LIST

1: automatic run system
10: work vehicle
20: satellite
11: vehicle control unit
13: run unit
13L: speed change lever (operation tool)
14: work instrument
14L: lifting/lowering lever (operation tool)
16: positioning unit
17: operation unit
111: run processing unit
112: reception processing unit
113: display processing unit
114: motion processing unit
137: steering wheel (operation tool)
161: positioning control unit
171: operation display unit
B2: physical switch
C1: icon image
F: farm field
K3: selection unit (reception button)

## Claims

1. A run control method that controls a run of a work vehicle capable of switching between an automatic run by an automatic steering and a manual run by a manual steering of an operator, the run control method comprising:
receiving the operator's operation on an operation tool that causes the work vehicle to perform a given motion;
causing the work vehicle to perform a motion that corresponds to the operator's operation on the operation tool; and
causing the work vehicle to automatically run when the operator's first operation on the operation tool is received, and causing the work vehicle to manually run when the operator's second operation on the operation tool is received.

2. The run control method according to claim 1, comprising:
causing the work vehicle to perform a first motion and to start the automatic run, when the first operation is received, and
causing the work vehicle to perform a second motion and to start the manual run, when the second operation is received.

3. The run control method according to claim 2, wherein
the work vehicle has a work instrument capable of lifting and lowering, the operation tool has a function of lifting and lowering the work instrument,
when the first operation to lower the work instrument is received, the work instrument is lowered and the work vehicle is caused to automatically run, and
when the second operation to lift the work instrument is received, the work instrument is lifted and the work vehicle is caused to manually run.

4. The run control method according to any one of claims 1 to 3, further comprising:
receiving, from the operator, a setting operation that sets whether or not to link a first function to cause to perform a given motion in response to the operator's operation on the operation tool, to a second function to switch between the automatic run and the manual run in response to the operator's operation on the operation tool.

5. The run control method according to claim 4, wherein
the setting operation is receivable both before and after a start of work by the work vehicle.

6. The run control method according to claim 4, wherein
the work vehicle is provided with a physical switch that receives the setting operation.

7. The run control method according to claim 4, wherein
the work vehicle is provided with a display unit that displays a work screen including work information, and
the display unit includes a reception button for receiving the setting operation.

8. The run control method according to any one of claims 4 to 7, wherein
the work vehicle is provided with a display unit that displays a work screen including work information, and
the run control method comprises causing, to be displayed on the work screen, information showing whether or not the first function is linked to the second function is displayed.

9. The run control method according to any one of claims 1 to 8, further comprising:
receiving, from the operator, an operation to select a type of the operation tool.

10. The run control method according to claim 9, wherein
the operation tool that performs a process of switching from the manual run to the automatic run and the operation tool that performs a process of switching from the automatic run to the manual run are different from each other.

11. A run control system that controls a run of a work vehicle capable of switching between an automatic run by an automatic steering and a manual run by a manual steering by an operator, the run control system comprising:
a reception processing unit that receives the operator's operation on an operation tool that causes the work vehicle to perform a given motion;
a motion processing unit that causes the work vehicle to perform a motion that corresponds to the operator's operation on the operation tool; and
a run processing unit that causes the work vehicle to automatically run when the operator's first operation on the operation tool is received, and that causes the work vehicle to manually run when the operator's second operation on the operation tool is received.

12. A work vehicle capable of switching between an automatic run by an automatic steering and a manual run by a manual steering of an operator, the work vehicle comprising:
an operation tool that causes the work vehicle to perform a given motion in response to the operator's operation; and
a control unit that causes the work vehicle to perform a first motion and to automatically run when the operator's first operation on the operation tool is received, and that causes the work vehicle to perform a second motion and to manually run when the operator's second operation on the operation tool is received.

13. A run control program that controls a run of a work vehicle capable of switching between an automatic run by an automatic steering and a manual run by a manual steering of an operator, the run control program being for causing one or more processors to perform operations comprising:
receiving the operator's operation on an operation tool that causes the work vehicle to perform a given motion;
causing the work vehicle to perform a motion that corresponds to the operator's operation on the operation tool; and
causing the work vehicle to automatically run when the operator's first operation on the operation tool is received, and causing the work vehicle to manually run when the operator's second operation on the operation tool is received.
